# EUROPÄISCHE PATENTSCHRIFT

(11) **EP 3 699 634 B1**
(45) Veröffentlichungstag und Bekanntmachung des Hinweises auf die Patenterteilung: **07.04.2021**
(21) Anmeldenummer: 19158518.1
(22) Anmeldetag: 21.02.2019
(51) Int. Cl.: G01S 15/93, G01S 17/93, G01S 7/40, G01S 7/481, G01S 7/497, G01S 13/88, G01S 7/52

(54) **SENSORMODUL**
SENSOR MODULE
MODULE DE CAPTEUR

(43) Veröffentlichungstag der Anmeldung: 26.08.2020
(73) Patentinhaber: SICK AG, 79183 Waldkirch (DE)
(72) Erfinder: STEINKEMPER, Heiko, 79183 Waldkirch (DE)
(74) Vertreter: Manitz Finsterwald Patent- und Rechtsanwaltspartnerschaft mbB

(56) Entgegenhaltungen:
- EP-A1- 3 367 135
- DE-U1-202011 000 365
- DE-U1-202013 102 440
- US-A- 4 679 175

## Beschreibung

Die vorliegende Erfindung betrifft ein Sensormodul, eine Maschine mit einem Sensormodul, sowie ein Verfahren zum Betreiben eines Sensormoduls.

Ein Sensormodul kann insbesondere in sicherheitsgerichteten Steuersystemen zur Überwachung eines Sicherheitsbereichs eingesetzt werden, um ein Eindringen von Detektionsobjekten in den Sicherheitsbereich zu detektieren und anschließend eine Sicherheitsreaktion des Steuersystems zu ermöglichen. Derartige Detektionsobjekte können insbesondere Personen und Körperteile von Personen sein, die in dem Sicherheitsbereich durch eine von dem Steuersystem gesteuerte Maschine gefährdet sind. Ein Sensormodul kann aber auch zur Detektion von Detektionsobjekten vorgesehen sein, deren Anwesenheit oder Eintreten in einen Überwachungsbereich detektiert werden soll, ohne dass notwendigerweise eine Sicherheitsreaktion ausgelöst werden muss. Für einen solchen Fall ist das Sensormodul nicht im obigen Sinne "sicherheitsgerichtet". Zum Beispiel kann ein Sensormodul auch dazu dienen, einen Produktionsablauf zu beobachten und zu überwachen um den Produktionsablauf zu steuern.

Bekannte Sensormodule umfassen mindestens einen Sensor zur Erfassung der Detektionsobjekte in einem Detektionsbereich des Sensormoduls. Zur Erhöhung der Detektionssicherheit des Sensors können während des Betriebs des Steuersystems, insbesondere zur Ausführungszeit eines durch das Steuersystem ausgeführten Steuerprogramms, Referenzmessungen des Sensors auf ein Referenzziel durchgeführt werden und bei den Referenzmessungen ermittelte Referenzmesswerte des Sensors mit hinterlegten Erwartungswerten verglichen werden. Werden bei dem Vergleich sicherheitskritische Abweichungen zwischen den Referenzmesswerten und den Erwartungswerten festgestellt, so kann eine Sicherheitsreaktion des Steuersystems, beispielsweise ein Not-Halt der durch das Steuersystem gesteuerten Maschine, ausgelöst werden oder eine Fehlermeldung generiert werden.

Druckschrift EP 3 136 127 A1 beschreibt ein Sensormodul, welches an einem beweglichen Maschinenteil, etwa einem Roboterarm, angeordnet werden kann. Ein Referenzziel für das Sensormodul ist getrennt von dem Sensormodul ausgebildet und in einer Umgebung der das Maschinenteil umfassenden Maschine angeordnet. Das Ausführen der Referenzmessung erfordert es daher, dass der Sensor des beweglich angeordneten Sensormoduls auf das Referenzziel ausgerichtet wird. Nachdem dies in der Regel eine Bewegung des kompletten Maschinenteils erfordert, dauert die Ausführung der Referenzmessung verhältnismäßig lange.

Druckschrift DE 20 2013 102 440 U1 beschreibt einen Laserscanner, bei dem eine mögliche Verunreinigung der Frontscheibe des Scanners mittels einer Überwachungseinrichtung überwacht wird, welche einen Sender und Empfänger aufweist, die getrennt von einer Sendeeinheit zur Erzeugung der Beobachtungsstrahlung des Laserscanners ausgebildet sind.

Druckschrift EP 3 367 135 A1 beschreibt ebenfalls einen Laserscanner, bei dem die Lichtdurchlässigkeit des Austrittsfensters des Scanners mittels Testsendern und Testdetektoren überprüft wird, die separat von der für die Entfernungsmessung verwendeten Sende- und Empfangseinheit ausgeführten sind.

Druckschrift DE 20 2011 000 365 U1 beschreibt einen Laserscanner mit einem drehbaren Ablenkspiegel und einem im Gehäuse des Laserscanners ortsfest integrierten Referenzziel.

Druckschrift US 4 679 175 A beschreibt einen Ultraschallsensor, bei welchem ein statisches Referenzziel im Strahlengang eines Sensorkopfs angeordnet ist.

Es ist Aufgabe der Erfindung ein Sensormodul, eine Maschine mit einem Sensormodul und ein Verfahren zum Betreiben eines Sensormoduls anzugeben, die schnelle und flexible Referenzmessungen des Sensormoduls ermöglichen.

Diese Aufgabe wird durch ein Sensormodul, eine Maschine mit einem Sensormodul und ein Verfahren zum Betreiben eines Sensormoduls gemäß den unabhängigen Ansprüchen gelöst. Weiterbildungen sind jeweils in den abhängigen Ansprüchen angegeben.

Ein Sensormodul umfasst einen Sensor, der dazu ausgebildet ist, ein in einem Detektionsbereich des Sensormoduls befindliches Detektionsobjekt zu erfassen. Das erfindungsgemäße Sensormodul weist ferner ein Referenzziel auf, wobei das Referenzziel relativ zu dem Sensor zwischen einer Teststellung und einer Ruhestellung bewegbar ist. In der Teststellung ist das Referenzziel zumindest teilweise in einem zwischen dem Sensor und dem Detektionsbereich des Sensormoduls angeordneten Zwischenbereich angeordnet, um eine Referenzmessung des Sensors auf das Referenzziel zu ermöglichen. In der Ruhestellung ist es außerhalb des Zwischenbereichs angeordnet, um ein Erfassen eines in dem Detektionsbereich des Sensormoduls vorhandenen Detektionsobjekts durch den Sensor zu ermöglichen. Das Referenzziel ist an dem Sensormodul angeordnet und mit dem Sensor verbunden.

Das erfindungsgemäße Sensormodul kann als ein Sicherheitssensormodul ausgebildet sein, welches ein Detektionsobjekt gemäß den einschlägigen Sicherheitsnormen sicher erfassen kann. Ein derartiges Sicherheitssensormodul kann insbesondere dazu ausgebildet sein, auch die Referenzmessung entsprechend sicher gemäß den einschlägigen Sicherheitsnormen auszuführen.

Der Sensor des Sensormoduls kann als ein optoelektronischer Distanzsensor, beispielsweise als optoelektronischer Taster, ausgebildet sein. Zur Bestimmung des Abstandes eines Detektionsobjekts kann der Sensor als Lichtlaufzeitsensor ausgebildet sein, der den Abstand mittels des Lichtlaufzeitprinzips ermittelt. Der Sensor kann alternativ oder zusätzlich nach Art eines Scanners dazu ausgebildet sein, zur Erfassung des Detektionsobjekts einen ablenkbaren Taststrahl elektromagnetischer Strahlung, zum Beispiel Laserstrahlung, zu emittieren und durch ein Ablenken des Taststrahls einen Erfassungsbereich des Sensors abzutasten. Der Erfassungsbereich kann beispielsweise eben ausgebildet sein.

Das Referenzziel wird in der Teststellung in einem vordefinierten Referenzabstand zu dem Sensor angeordnet und der Sensor kann dazu ausgebildet sein, im Rahmen der Referenzmessung einen Referenzmesswert des Referenzabstands zu messen. Das Referenzziel kann eine an den Sensor angepasste, insbesondere an die Detektionsmethode des Sensors angepasste, Beschaffenheit aufweisen, zum Beispiel eine Farbe und/oder eine Oberflächenstruktur und/oder ein Material des Referenzziels.

Das Referenzziel kann in der Teststellung derart angeordnet sein, dass es bei Ausführung des Sensors als Scanner von dem Taststrahl in jeder Ablenkposition des Taststrahls erfasst wird. Dadurch wird eine vollständige Überprüfung der Sensorfunktionen des Sensors ermöglicht, insbesondere eine Überprüfung der Abtastfunktion. Das Referenzziel kann beispielsweise eine entlang einer Ablenkrichtung des Taststrahls räumlich veränderliche Struktur bzw. ein entlang der Ablenkrichtung räumlich veränderliches Muster aufweisen, wobei der Sensor dann dazu ausgebildet ist, das Muster bzw. die Struktur in unterschiedlichen Ablenkpositionen zu erfassen, so dass anhand des Musters bzw. der Struktur zwischen den unterschiedlichen Ablenkpositionen unterschieden werden kann. Insbesondere können der Referenzabstand, sowie hinterlegte Erwartungswerte des Referenzabstandes entlang der Ablenkrichtung eine vorgegebene Variation aufweisen und eine Variation der Referenzmesswerte entlang der Ablenkrichtung kann mit der vorgegebenen Variation der des Referenzabstandes verglichen werden.

Der Zwischenbereich zwischen dem Sensor und dem Detektionsbereich des Sensormoduls kann denjenigen Raumbereich des Erfassungsbereichs des Sensors vollständig umfassen, welcher zwischen dem Sensor und dem Detektionsbereich des Sensormoduls liegt. Das Referenzziel kann in der Teststellung derart in dem Zwischenbereich angeordnet sein, dass es ausgehend von dem Sensor den Detektionsbereich zumindest teilweise, vorzugsweise vollständig, verdeckt. In der Ruhestellung kann das Referenzziel den Detektionsbereich vollständig freigeben.

Das Referenzziel kann an einer gegenüber dem Sensor beweglich angeordneten Referenzzieleinheit angeordnet sein, wobei das Referenzziel als eine dem Sensor zugewandte Fläche der Referenzzieleinheit ausgebildet sein kann. Die Referenzzieleinheit kann zum Beispiel als ein gegenüber dem Sensor beweglicher Verschluss des Sensors, insbesondere als ein gegenüber einem Gehäuse des Sensormoduls beweglicher Verschluss des Gehäuses, ausgebildet sein, wobei das Referenzziel an einer dem Sensor zugewandten Innenseite des Verschlusses angeordnet ist. Der Verschluss kann dabei beispielsweise ein Lamellenverschluss, insbesondere ein irisförmiger bzw. blendenförmiger Lamellenverschluss, ein Rotationsverschluss oder ein Schlitzverschluss sein.

Das Referenzziel und der Sensor können zum Beispiel auch derart beweglich miteinander verbunden sein, dass das Referenzziel gegenüber dem Sensor rotierend und/oder verschiebbar und/oder klappbar angeordnet ist.

Das Sensormodul kann mitfahrend an einem beweglichen bzw. bewegbaren Maschinenteil einer Maschine anordenbar sein. Das Maschinenteil kann beispielsweise als ein Roboterarm, insbesondere als ein Endglied eines Roboterarms, ausgebildet sein. An dem beweglichen Maschinenteil kann sich eine Werkzeugeinheit zur Aufnahme eines durch das Maschinenteil geführten Werkzeugs befinden, wobei der Detektionsbereich des Sensormoduls an die Kontur bzw. die räumliche Ausdehnung des Werkzeugs angepasst sein kann. Insbesondere kann der Detektionsbereich des Sensormoduls, gegebenenfalls zusammen mit weiteren Detektionsbereichen des Sensormoduls, einen Sicherheitsbereich umgeben, der an die Kontur bzw. räumliche Ausdehnung des Werkzeugs angepasst ist.

Bei dem Werkzeug kann es sich beispielsweise um ein trennendes Werkzeug, etwa einen Laserschneidkopf, ein zerspanendes Werkzeug, etwa einen Fräskopf, oder um einen Schweißkopf handeln, so dass Gefahr für in einem Arbeitsbereich der Maschine anwesende Personen besteht.

Die Anordnung des Referenzziels an dem erfindungsgemäßen Sensormodul bewirkt, dass die relative Lage zwischen dem Referenzziel und dem Sensor bei einer Bewegung des Sensormoduls beibehalten wird. Insbesondere kann das Sensormodul räumlich beweglich ausgebildet sein, so dass der Detektionsbereich des Sensormoduls bei einer Bewegung des Sensormoduls unterschiedliche räumliche Lagen einnehmen kann, wobei jedoch die relative Lage zwischen dem Sensor und dem Referenzziel beibehalten wird.

Im Rahmen der Erfindung wurde erkannt, dass Referenzmessungen besonders schnell und flexibel ausgeführt werden können, wenn das Referenzziel in das Sensormodul integriert und gleichzeitig gegenüber dem Sensor beweglich ist. Dadurch kann die Referenzmessung auch bei Bewegung des Sensormoduls besonders einfach durchgeführt werden. Indem das Referenzziel beweglich mit dem Sensor verbunden ist, ist es möglich, das Referenzziel lediglich während der Referenzmessung in die Teststellung zur verbringen und ansonsten in der Ruhestellung zu platzieren, so dass dann eine Abschattung des Detektionsbereichs vermieden wird.

Mit dem erfindungsgemäßen Sensormodul kann die Referenzmessung unabhängig von der Arbeitsumgebung der das Sensormodul umfassenden Maschine und unabhängig von der räumlichen Lage des Sensormoduls durchgeführt werden. Es müssen zudem keine Referenzziele innerhalb der Arbeitsumgebung der Maschine angeordnet oder bei einer Umgestaltung eines Arbeitsablaufs der Maschine berücksichtigt werden. Zudem kann die Testmessung unabhängig von der Lage des Sensormoduls und grundsätzlich zu jedem beliebigen Zeitpunkt durchgeführt werden.

Bei einer Weiterbildung des Sensormoduls ist der Sensor in einem Gehäuse des Sensormoduls angeordnet und starr damit verbunden. Außerdem ist das Referenzziel ebenfalls an dem Gehäuse bzw. in dem Gehäuse angeordnet und beweglich damit verbunden. Indem sowohl der Sensor als auch das Referenzziel mit dem Gehäuse verbunden sind, können der Sensor und das Referenzziel auf einfache Weise unter Beibehaltung ihrer relativen Lage bewegt werden. Ist das Referenzziel innerhalb des Gehäuses angeordnet, ist es zudem vor äußeren Einflüssen geschützt, die zu Beschädigungen oder Verschmutzungen des Referenzziels führen könnten.

Der Erfassungsbereich eines innerhalb des Gehäuses angeordneten Sensors erstreckt sich durch eine Gehäuseöffnung des Gehäuses. Der Detektionsbereich des Sensormoduls kann dabei durch denjenigen Teil des Erfassungsbereichs des Sensors gebildet werden, der außerhalb des Gehäuses angeordnet ist, wobei das Referenzziel in oder an dem Gehäuse derart beweglich angeordnet sein kann, dass es in der Teststellung die Gehäuseöffnung zumindest teilweise, bevorzugt vollständig, verdeckt.

Bei einer Weiterbildung des Sensormoduls ist das Referenzziel um eine Drehachse drehbar mit dem Sensor verbunden und dazu ausgebildet, zwischen der Teststellung und der Ruhestellung durch Drehung um die Drehachse bewegt zu werden.

Beispielsweise kann die ganze, das Referenzziel umfassende Referenzzieleinheit um die Drehachse drehbar angeordnet und mit dem Sensor verbunden sein. Sie kann dazu zum Beispiel ringförmig um die Drehachse ausgebildet sein. Zum Beispiel kann das Referenzziel auf einer senkrecht zu der Drehachse orientierten Oberfläche einer ringscheibenförmigen Referenzzieleinheit angeordnet sein

Die Referenzzieleinheit kann aber auch zylinderförmig um die Drehachse angeordnet sein, wobei das Referenzziel dazu parallel zu der Drehachse ausgerichtet ist. Das Referenzziel kann dabei auf einer der Drehachse zugewandten Innenseite der Referenzzieleinheit angeordnet sein. In diesem Fall ist die Detektionsrichtung des Sensors radial nach außen gerichtet.

Bei einer Weiterbildung des Sensormoduls ist das Referenzziel um 360° drehbar um die Drehachse angeordnet. Dadurch kann das Referenzziel auf einfache Weise und ohne Änderung der Drehrichtung aus der Teststellung in die Ruhestellung und wieder zurück in die Teststellung bewegt werden. Auf diese Weise ist auch ein kontinuierlicher Wechsel zwischen Teststellung und Ruhestellung möglich, indem eine fortlaufende Drehung durchgeführt wird.

Das Referenzziel kann periodisch zwischen der Teststellung und der Ruhestellung bewegt werden, etwa durch fortlaufende Drehung bei drehbarer Anordnung des Referenzziels. Dabei können die Referenzmessungen mit einer durch die periodische Bewegung vorgegebenen Testrate durchgeführt werden. Die Testrate kann während des Betriebs des Sensormoduls auch geändert werden, etwa durch Änderung der Drehgeschwindigkeit des Referenzziels.

Das Referenzziel kann flächig ausgebildet sein, etwa als ebene Fläche oder gekrümmte Fläche, insbesondere als eine um die Drehachse gekrümmte Fläche.

Eine Weiterbildung des Sensormoduls umfasst einen weiteren Sensor, wobei der weitere Sensor dazu ausgebildet ist, ein in einem weiteren Detektionsbereich des Sensormoduls angeordnetes weiteres Detektionsobjekt zu erfassen. Das Sensormodul umfasst einen zwischen diesem weiteren Sensor und diesem weiteren Detektionsbereich angeordneten weiteren Zwischenbereich, wobei das Referenzziel dazu ausgebildet ist, in eine weitere Teststellung bewegt zu werden, und wobei das Referenzziel in der weiteren Teststellung in dem weiteren Zwischenbereich angeordnet ist, um eine Referenzmessung des weiteren Sensors auf das Referenzziel zu ermöglichen.

Indem das Referenzziel dazu ausgebildet ist, nicht nur in dem zwischen dem Sensor und dem Detektionsbereich angeordneten Zwischenbereich, sondern auch in dem zwischen dem weiteren Sensor und dem weiteren Detektionsbereich angeordneten weiteren Zwischenbereich angeordnet zu werden, ist es möglich, die Referenzmessung des Sensors und die Referenzmessung des weiteren Sensors mit einem einzigen Referenzziel durchzuführen. Dadurch können die Referenzmessung und die weitere Referenzmessung bei geringem konstruktivem Aufwand realisiert werden. Das Referenzziel kann insbesondere dazu ausgebildet sein, durch Drehung um die Drehachse in den weiteren Zwischenbereich bewegt zu werden.

Es versteht sich, dass das Sensormodul neben dem Sensor auch mehrere derartige weitere Sensoren zur unabhängigen Erfassung mehrerer weiterer Detektionsobjekte in jeweils mehreren weiteren Detektionsbereichen des Sensormoduls umfassen kann. Zwischen den weiteren Detektionsbereichen und den jeweils zugeordneten weiteren Sensoren kann dann jeweils einer von mehreren weiteren Zwischenbereichen angeordnet sein, in denen das Referenzziel zur Ausführung von Referenzmessungen der weiteren Sensoren angeordnet werden kann. Die Referenzmessungen der weiteren Sensoren auf das Referenzziel können auf die gleiche Weise erfolgen, wie es für die Referenzmessung des Sensors auf das Referenzziel beschrieben wird. Insbesondere kann das Referenzziel dazu ausgebildet sein, durch Drehung um die Drehachse in jeden der einzelnen weiteren Zwischenbereiche bewegt zu werden und das Sensormodul kann dazu ausgebildet sein, die Referenzmessung des Sensors und die Referenzmessungen der einzelnen weiteren Sensoren nacheinander durchzuführen.

Der Sensor und die weiteren Sensoren können entlang einer um eine Zentralachse verlaufende Umfangrichtung nebeneinander angeordnet sein. Umfasst das Sensormodul eine um die Drehachse drehbar angeordnete Referenzzieleinheit, so können die Zentralachse und die Drehachse zusammenfallen, so dass die Zentralachse durch die Drehachse gebildet wird.

Die Sensoren können derart ausgerichtet sein, dass die Hauptmessrichtungen der Detektionsbereiche der Sensoren jeweils parallel zu der Zentralachse ausgerichtet und die Detektionsbereiche nebeneinander, insbesondere zumindest teilweise überlappend nebeneinander, angeordnet sind. Die Hauptmessrichtungen der Detektionsbereiche verlaufen dabei jeweils entlang von Mittenachsen der ebenen Detektionsbereiche. Die Sensoren können alternativ auch derart ausgerichtet sein, dass die Hauptmessrichtungen der Detektionsbereiche senkrecht zu der Zentralachse, in unterschiedliche Richtungen radial nach außen ausgerichtet sind.

Bei einer anderen Ausführungsform des Sensormoduls umfasst das Sensormodul ein oder mehrere Referenzziele. Das weitere Referenzziel ist dazu ausgebildet, zwischen der weiteren Teststellung und einer weiteren Ruhestellung bewegt zu werden, wobei das weitere Referenzziel in der weiteren Teststellung in dem weiteren Zwischenbereich angeordnet ist, um eine Referenzmessung des weiteren Sensors auf das weitere Referenzziel zu ermöglichen.

Im Gegensatz zu der bisher beschriebenen Ausführungsform kann hier also z.B. für jeden Sensor ein eigenes Referenzziel vorgesehen sein.

Bei einer Weiterbildung des Sensormoduls ist das weitere Referenzziel mit dem Referenzziel starr verbunden und dazu ausgebildet, synchron mit dem Referenzziel zwischen der weiteren Teststellung und der weiteren Ruhestellung bewegt zu werden. Dies ermöglicht es insbesondere, die Referenzmessung des Sensors und die Referenzmessung des weiteren Sensors gleichzeitig durchzuführen. Dies verringert eine für ein Ausführen der Referenzmessungen benötigte Messzeit. Umfasst das Sensormodul mehrere weitere Referenzziele, können alle weiteren Referenzziele dazu ausgebildet sein, gleichzeitig mit dem Referenzziel in die jeweilige weitere Teststellung bewegt zu werden.

Bei einer alternativen Ausführungsform des Sensormoduls sind der Sensor und der weitere Sensor entlang einer um eine Zentralachse verlaufenden Umfangrichtung angeordnet und das Referenzziel ist entlang der Zentralachse verschiebbar ausgebildet. Das derartige Sensormodul kann außerdem das weitere Referenzziel oder die mehreren weiteren Referenzziele umfassen, wobei auch das weitere Referenzziel oder die mehreren weiteren Referenzziele entlang der Zentralachse verschiebbar ausgebildet sind.

Es wird ferner eine Maschine mit einem beweglichen Maschinenteil und einem erfindungsgemäßen Sensormodul angegeben, wobei das Sensormodul starr, insbesondere mitfahrend, an dem beweglichen Maschinenteil angeordnet ist. Die Maschine und/oder das bewegliche Maschinenteil können ausgebildet sein, wie es im Zusammenhang mit dem Sensormodul beschrieben wird. Insbesondere beziehen sich alle im Zusammenhang mit dem Sensormodul beschriebenen Weiterbildungen auch auf Weiterbildungen der Maschine. Das bewegliche Maschinenteil kann eine Werkzeugeinheit mit einem Werkzeug umfassen. Das bewegliche Maschinenteil kann beispielsweise eine bewegliche Fräs- oder Bohreinheit einer Materialbearbeitungsmaschine sein. Das bewegliche Maschinenteil kann aber auch ein Fahrzeugteil eines Fahrzeugs, insbesondere eines fahrerlosen Transportfahrzeugs, sein und der Sensor kann als ein Umfeldsensor des Fahrzeugs ausgebildet sein.

Bei einer Weiterbildung der Maschine ist das bewegliche Maschinenteil als ein Roboterarm ausgebildet und das Sensormodul ist derart an einem vorderen Ende des Roboterarms angeordnet, dass sich der Detektionsbereich des Sensors mit dem Roboterarm mitbewegt, um eine Annäherung des Roboterarms, vorzugsweise eine Annäherung einer starr mit dem vorderen Ende des Roboterarms verbundenen Werkzeugeinheit an ein Detektionsobjekts zu erfassen und dadurch den Roboterarm abzusichern. Bei der derart weitergebildeten Maschine wird umgekehrt auch eine Annäherung eines Detektionsobjekts an den Roboterarm, insbesondere an die starr mit dem vorderen Ende des Roboterarms verbundene Werkzeugeinheit, erfasst.

Es wird außerdem ein Verfahren zum Betreiben eines Sensormoduls mit einem Sensor und einem mit dem Sensor beweglich verbundenen Referenzziel angegeben. Dabei umfasst das Verfahren die folgenden Schritte:
- Anordnen des Referenzziels in einer Teststellung, wobei das Referenzziel in der Teststellung zumindest teilweise in einem zwischen dem Sensor und einem Detektionsbereich des Sensormoduls angeordneten Zwischenbereich angeordnet wird,
- Ausführen einer Referenzmessung des Sensors auf das Referenzziel,
- Bewegen des Referenzziels von der Teststellung in eine Ruhestellung, wobei das Referenzziel in der Ruhestellung außerhalb des Zwischenbereichs angeordnet ist,
- Erfassen eines in dem Detektionsbereich befindlichen Detektionsobjekts mittels des Sensors.

Das Verfahren kann beispielsweise mittels des erfindungsgemäßen Sensormoduls ausgeführt werden. Insofern beziehen sich alle beschriebenen Weiterbildungen des Sensormoduls bzw. einer das Sensormodul umfassenden Maschine auch auf das erfindungsgemäße Verfahren. Das Verfahren kann durch eine sichere Steuerkomponente des Sensormoduls ausgeführt werden und in einem Steuerprogramm zur Ausführung des Verfahrens in der sicheren Steuerkomponente hinterlegt sein. Die sichere Steuerkomponente kann insbesondere sicher gemäß den einschlägigen Sicherheitsnormen, beispielsweise redundant, ausgeführt sein. Die Steuerkomponente kann in dem Sensormodul selbst angeordnet sein, sie kann jedoch auch in einer getrennt von dem Sensormodul angeordneten und mit dem Sensormodul über Datenleitungen verbundenen Sicherheitssteuereinheit angeordnet sein. Mittels der sicheren Steuerkomponente kann ein sicherer Selbsttest des Sensormoduls realisiert werden.

Eine Ausführung des Selbsttests, insbesondere der Referenzmessung, mittels der sicheren Steuerkomponente ermöglicht es insbesondere, einen unsicheren Standardsensor als den Sensor des Sensormoduls zu verwenden, wobei der Sensor selbst frei von sicherheitsbezogenen Einrichtungen ist. Die Referenzmessungen oder der Selbsttests können während eines Betriebs eines Steuersystems für die das Sensormodul umfassende Maschine, insbesondere zur Ausführungszeit eines durch das Steuersystem ausgeführten Steuerprogramms für die Maschine, durchgeführt werden.

Das Ausführen der Referenzmessung kann eine Erzeugung eines Referenzmesswerts einer Messgröße des Referenzziels umfassen, die beispielsweise der Referenzabstand des Referenzziels sein kann. Das Verfahren kann ferner ein Vergleichen des Referenzmesswerts mit einem hinterlegten Erwartungswert für die Messgröße umfassen.

Das Verfahren kann außerdem ein Auslösen einer Sicherheitsreaktion umfassen, falls eine sicherheitskritische Abweichung des Referenzmesswerts von dem Erwartungswert festgestellt wird. Eine sicherheitskritische Abweichung kann beispielsweise jede Abweichung sein, die einen vorgegebenen Toleranzwert überschreitet. Die Sicherheitsreaktion kann beispielsweise ein Not-Halt bzw. ein Abschalten einer das Sensormodul umfassenden Maschine sein. Das Verfahren kann weiterhin ein Freigeben einer gefahrbringenden Funktion der Maschine umfassen, falls keine sicherheitskritische Abweichung des Referenzmesswerts von dem Erwartungswert festgestellt wird.

Bei einer Weiterbildung des Verfahrens wird das Anordnen des Referenzziels in der Teststellung zum Ausführen der Referenzmessung periodisch wiederholt, vorzugsweise durch Drehung des Referenzziels um eine Drehachse. Dies ermöglicht es, den Sensor quasikontinuierlich zu testen. Das Referenzziel kann zum Beispiel jeweils lediglich für eine Referenzmessdauer in der Teststellung angeordnet bleiben. Die Referenzmessdauer kann insbesondere kürzer sein als eine Ruhedauer, während derer das Referenzziel in der Ruhestellung angeordnet ist. Ein Verhältnis zwischen Ruhedauer und Referenzmessdauer kann größer als zwei, insbesondere größer als fünf, insbesondere größer als zehn sein. Bei der um die Drehachse drehbar angeordneten Referenzzieleinheit können dazu beispielsweise zwischen den Referenzzielen angeordneten Aussparungen jeweils eine Fläche umfassen, die mindestens zweimal, insbesondere mindestens fünfmal, insbesondere mindestens zehnmal größer ist als die Flächen der Referenzziele.

Ein erfindungsgemäßes Sensormodul, eine erfindungsgemäße Maschine oder ein erfindungsgemäßes Verfahren können insbesondere in sicherheitsgerichteten Steuersystemen zur Überwachung eines Sicherheitsbereichs eingesetzt werden, um ein Eindringen von Detektionsobjekten in den Sicherheitsbereich zu detektieren und anschließend eine Sicherheitsreaktion des Steuersystems zu ermöglichen. Derartige Detektionsobjekte können insbesondere Personen und Körperteile von Personen sein, die in dem Sicherheitsbereich durch eine von dem Steuersystem gesteuerte Maschine gefährdet sind. Ein erfindungsgemäßes Sensormodul, eine erfindungsgemäße Maschine oder ein erfindungsgemäßes Verfahren können aber auch zur Detektion von Detektionsobjekten vorgesehen sein, deren Anwesenheit oder Eintreten in einen Überwachungsbereich detektiert werden soll, ohne dass notwendigerweise eine Sicherheitsreaktion ausgelöst werden muss. Zum Beispiel kann ein Sensormodul auch dazu dienen, einen Produktionsablauf zu beobachten und zu überwachen um den Produktionsablauf zu steuern.

Die Erfindung wird nachfolgend anhand von Figuren erläutert. Dabei zeigen in jeweils schematischer Darstellung:
- Fig. 1: eine Maschine mit einem an einem beweglichen Maschinenteil der Maschine angeordneten Sensormodul;
- Fig. 2: eine perspektivische Ansicht eines Sensormoduls;
- Fig. 3: eine seitliche Schnittansicht der ersten Ausführungsform des erfindungsgemäßen Sensormoduls;
- Fig. 4: eine Aufsicht auf eine Referenzzieleinheit der ersten Ausführungsform des erfindungsgemäßen Sensormoduls;
- Fig. 5: eine Aufsicht auf eine Referenzzieleinheit einer zweiten Ausführungsform des erfindungsgemäßen Sensormoduls;
- Fig. 6: eine Aufsicht auf eine dritte Ausführungsform des erfindungsgemäßen Sensormoduls;
- Fig. 7: eine perspektivische Ansicht einer Referenzzieleinheit der dritten Ausführungsform des erfindungsgemäßen Sensormoduls;
- Fig. 8: eine Ansicht einer Referenzzieleinheit einer vierten Ausführungsform des erfindungsgemäßen Sensormoduls; und
- Fig. 9: ein Flussdiagramm eines Verfahrens zum Betreiben des erfindungsgemäßen Sensormoduls.

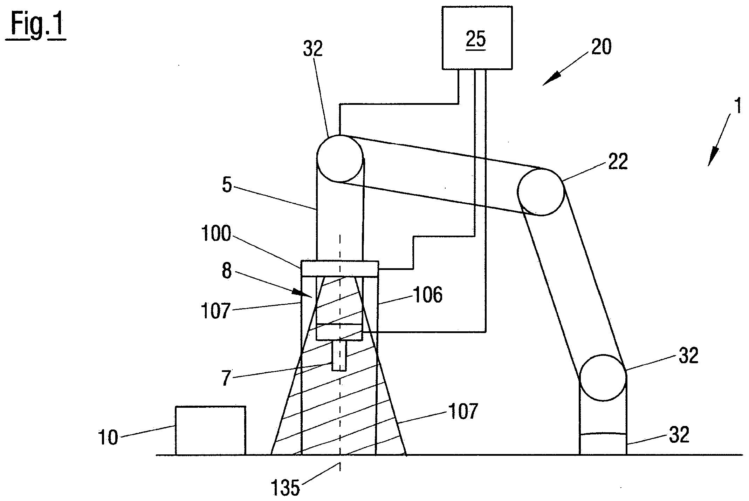

Fig. 1 zeigt eine Maschine mit einem beweglichen Maschinenteil. Die Maschine ist als ein Roboter 1 und der bewegliche Maschinenteil ist als ein Roboterarm 5 des Roboters 1 ausgeführt. Der Roboter 1 ist ortsfest angeordnet und der Roboterarm 5 wird über vier Antriebe 32 im Raum bewegt. An einem vorderen Ende des Roboterarms 5 sind eine Werkzeugeinheit 7 mit einem Werkzeug und ein Sensormodul 100 angeordnet.

Das Sensormodul 100 ist Teil eines sicherheitsgerichteten Steuersystems 20 des Roboters 1, das dazu ausgebildet ist, eine Annäherung eines Detektionsobjekts 10 an die Werkzeugeinheit 7 bzw. umgekehrt eine Annäherung der Werkzeugeinheit 7 an das Detektionsobjekt 10 zu detektieren und bei Detektion derartiger Annäherungen als Sicherheitsreaktion einen Not-Halt des Roboters 1 auszuführen. Alternativ kann die Sicherheitsreaktion auch darin bestehen, dass der Roboterarm 5 dem Detektionsobjekt 10 ausweicht. Zur Ausführung der Sicherheitsreaktion umfasst das sicherheitsgerichtete Steuersystem 20 eine Sicherheitssteuereinheit 25, welche mit dem Sensormodul 100, mit zumindest einem der Antriebe 32, sowie mit der Werkzeugeinheit 7 über Datenleitungen verbunden ist. Wird mittels des Sensormoduls 100 eine Annäherung zwischen dem Roboterarm 5 und dem Detektionsobjekt 10 detektiert und über die Datenleitungen an die Sicherheitssteuereinheit 25 übermittelt, setzt die Sicherheitssteuereinheit 25 zur Ausführung des Not-Halts den Antrieb 32 und die Werkzeugeinheit 7 über die Datenleitungen still.

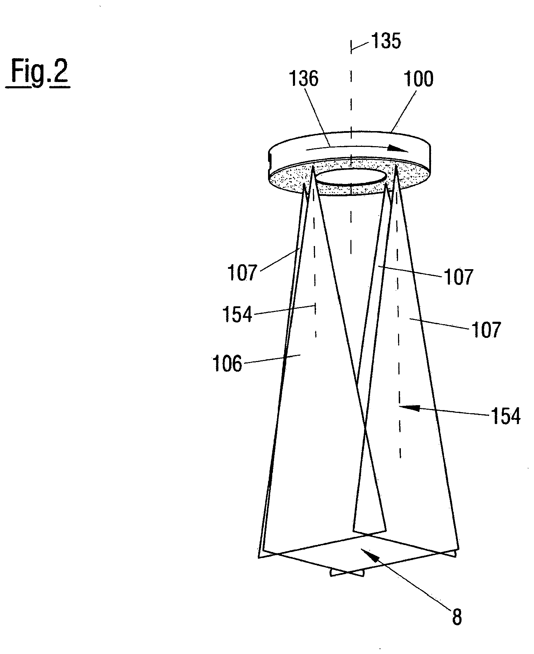

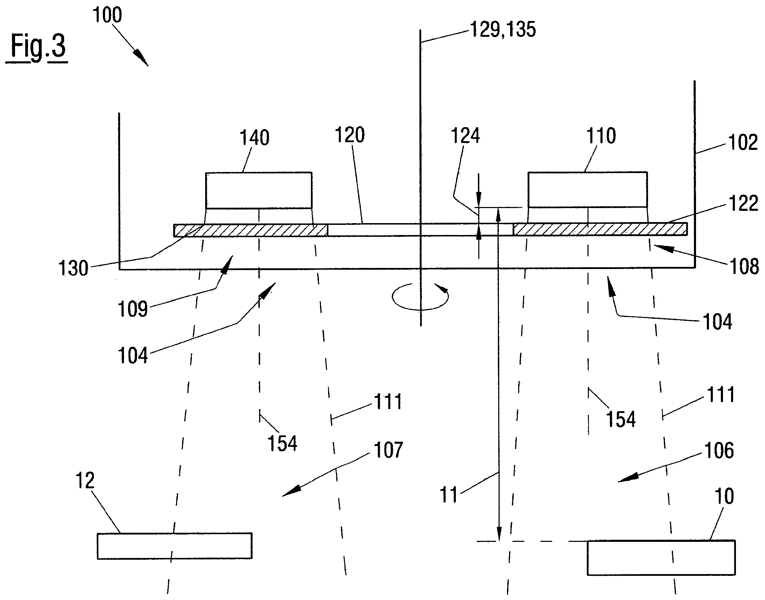

Fig. 2 zeigt das Sensormodul 100 in einer perspektivischen Darstellung und Fig. 3 zeigt das Sensormodul 100 in einer seitlich geschnittenen Ansicht. Das Sensormodul 100 ist ringförmig um eine Zentralachse 135 ausgebildet und umfasst einen Sensor 110, sowie drei weitere Sensoren 140, von denen lediglich einer in der Schnittansicht der Fig. 3 zu sehen ist. Soweit im Folgenden keine Unterschiede beschrieben werden oder dargestellt sind, sind die weiteren Sensoren 140 ausgebildet, wie es für den Sensor 110 beschrieben wird.

Wie in Fig. 3 dargestellt ist, sind die Sensoren 110, 140 in einem Gehäuse 102 des Sensormoduls 100 angeordnet. Sie sind als Entfernungssensoren ausgebildet und weisen jeweils Erfassungsbereiche 111 auf, welche sich von den Sensoren 110, 140 aus einem Inneren des Gehäuses 102 durch Gehäuseöffnungen 104 des Gehäuses 102 ins Äußere des Gehäuses 102 erstrecken. Dabei bildet ein außerhalb des Gehäuses 102 angeordneter Teil des Erfassungsbereichs 111 des Sensors 110 einen Detektionsbereich 106 des Sensormoduls 100 und außerhalb des Gehäuses 102 angeordnete Teile der Erfassungsbereiche 111 der weiteren Sensoren 140 jeweils weitere Detektionsbereiche 107 des Sensormoduls 100. Die Sensoren 110, 140 sind im Inneren des Gehäuses 102 und damit in Fig. 2 nicht sichtbar ringförmig und paarweise einander gegenüberliegend entlang einer Umfangrichtung 136 um die Zentralachse 135 angeordnet.

Um eine Annäherung zwischen dem Roboterarm 5 und dem Detektionsobjekt 10 zu erkennen, ist der Sensor 110 dazu ausgebildet, das Detektionsobjekt 10 zu erfassen, wenn es sich in dem Detektionsbereich 106 des Sensormoduls 100 befindet bzw. in den Detektionsbereich 106 eintritt. Außerdem ist der Sensor 110 dazu ausgebildet, einen Abstand 11 zwischen dem Sensor 110 und dem Detektionsobjekt 10 zu messen. Analog sind die weiteren Sensoren 140 jeweils dazu ausgebildet, ein in den weiteren Detektionsbereichen 107 der weiteren Sensoren 140 vorhandenes bzw. ein in die weiteren Detektionsbereiche 107 eintretendes weiteres Detektionsobjekt 12 zu erfassen und dessen Abstand zu messen. Das weitere Detektionsobjekt 12 kann auch durch das Detektionsobjekt 10 gebildet werden, etwa dann, wenn das Detektionsobjekt 10 derart ausgedehnt ist, dass es sich gleichzeitig in den Detektionsbereichen 106, 107 mehrere Sensoren 110, 140 befindet. Die Sensoren 110, 140 sind dazu ausgebildet, in ihren Detektionsbereichen 106, 107 vorhandene Detektionsobjekte 10, 12 jeweils unabhängig von den anderen Sensoren 110, 140 zu erfassen.

Die Erfassungsbereiche 111 der Sensoren 110, 140 und damit auch die Detektionsbereiche 106, 107 des Sensormoduls 100 sind jeweils eben und flächig ausgebildet. Sie weisen jeweils Hauptmessrichtungen 154 auf, welche jeweils parallel zu der Zentralachse 135 ausgerichtet sind. Die Sensoren 110, 140 emittieren zur Erfassung der Detektionsobjekte 10, 12 einen entlang der flächigen Erfassungsbereiche 111 ablenkbaren Taststrahl und tasten die Erfassungsbereiche 111 jeweils durch Ablenken des Taststrahls ab.

Wie in den Fig. 1 und 2 dargestellt ist, ist das Sensormodul 100 derart an dem Roboterarm 5 angeordnet, dass die Werkzeugeinheit 7 auf der Zentralachse 135 und entlang der Hauptmessrichtungen 154 unterhalb des Sensormoduls 100 angeordnet ist. Dabei umgeben die Detektionsbereiche 106, 107 die Werkzeugeinheit 7, sowie einen um die Werkzeugeinheit 7 angeordneten Sicherheitsbereich 8. Insofern sind die Detektionsbereiche 106, 107 an eine Kontur bzw. eine räumliche Ausdehnung des Werkzeugs angepasst. Die Detektionsbereiche 106, 107 des Sensormoduls 100 sind derart um den Sicherheitsbereich 8 angeordnet, dass die Detektionsobjekte 10, 11 die Detektionsbereiche 106, 107 durchqueren müssen, wenn sie in den Sicherheitsbereich 8 eintreten. Werden die Detektionsobjekte 10, 11 in einem der Detektionsbereiche 106, 107 detektiert, kann daraus auf eine Verletzung des Sicherheitsbereichs 8 geschlossen werden und der Not-Halt des Roboters 1 ausgeführt werden.

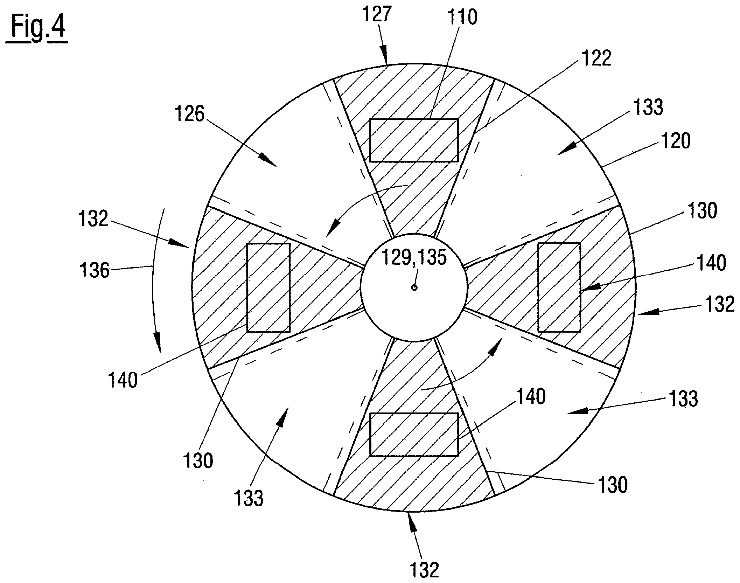

Im Rahmen einer sicherheitsgerichteten Überwachung des Sicherheitsbereichs 8 ist es notwendig, die Sensoren 110, 140 regelmäßig auf korrekte Funktion zu testen und zu überprüfen, ob durch die Sensoren 110, 140 gemessene Abstände korrekt erfasst werden. Zur Überprüfung der Sensoren 110, 140 umfasst das Sensormodul 100 eine Referenzzieleinheit 120, welche in Fig. 3 in einer seitlichen Schnittansicht und in Fig. 4 zusätzlich in einer Aufsicht von unten dargestellt ist.

Die Referenzzieleinheit 120 ist drehbar um eine Drehachse 129 angeordnet, die hier durch die Zentralachse 135 gebildet wird, um die die Sensoren 110, 140 des Sensormoduls 100 kreisförmig angeordnet sind. Wie in den Figuren 3 und 4 dargestellt ist, ist die Referenzzieleinheit 120 als eine senkrecht zu der Drehachse 129 orientierte Platte ausgebildet und entlang der Drehachse 129 zwischen den Sensoren 110, 140 und dem Gehäuse 102 angeordnet. Bei der gezeigten Ausführungsform der Referenzzieleinheit 120 handelt es sich um eine um die Drehachse 129 angeordnete Ringscheibe.

Wie ebenfalls in Fig. 4 dargestellt ist, weist die Referenzzieleinheit 120 ein Referenzziel 122, sowie insgesamt drei weitere Referenzziele 130 auf. Das Referenzziel 122 und die weiteren Referenzziele 130 sind auf einander paarweise gegenüberliegenden Teilsektoren der Ringscheibe der ersten Referenzzieleinheit 120 gebildet und an einer den Sensoren 110, 140 zugewandten Oberfläche der ersten Referenzzieleinheit 120 angeordnet. Sie sind flächig ausgebildet und senkrecht zu der Drehachse 129 orientiert.

Die Referenzzieleinheit 120 kann, wie in Fig. 3 dargestellt innerhalb des Gehäuses 102 oder (nicht dargestellt) außerhalb des Gehäuses vor den Gehäuseöffnungen 104 angeordnet sein.

In der in den Figuren 3 und 4 dargestellten Stellung der Referenzzieleinheit 120 befindet sich das Referenzziel 122 in einer Teststellung 127 vor dem Sensor 110 und die weiteren Referenzziele 130 jeweils in weiteren Teststellungen 132 vor den weiteren Sensoren 140. Bei der Referenzzieleinheit 120 sind das Referenzziel 122 und die weiteren Referenzziele 130 also derart an der Referenzzieleinheit 120 angeordnet, dass die weiteren Referenzziele 130 in den weiteren Teststellungen 132 angeordnet sind, wenn sich das Referenzziel 122 in der Teststellung 127 befindet.

Bei der Ausführungsform der Fig. 3 ist das Referenzziel 122 in der Teststellung 127 in einem Zwischenbereich 108 vor dem Sensor 110 angeordnet und die weiteren Referenzziele 130 sind in den weiteren Teststellungen 132 jeweils in weiteren Zwischenbereichen 109 vor den weiteren Sensoren 140 angeordnet. Die Zwischenbereiche 108, 109 werden jeweils durch innerhalb des Gehäuses 102 angeordnete Teile der Erfassungsbereiche 111 der einzelnen Sensoren 110, 140 gebildet. In den Teststellungen 127, 132 verdecken die Referenzziele 122, 130 jeweils die Gehäuseöffnungen 104 und damit die Detektionsbereiche 106, 107, sowie die in den Detektionsbereichen 106, 107 möglicherweise befindlichen Detektionsobjekte 10, 12.

Der Sensoren 110, 140 sind dazu ausgebildet, Referenzmessungen auf die in den Teststellungen 127, 132 angeordneten Referenzziele 122, 130 auszuführen. Dazu ermitteln die Sensoren 110, 140 jeweils Referenzmesswerte der Referenzabstände 124, in denen die Referenzziele 122, 130 jeweils vor den betreffenden Sensoren 110, 140 angeordnet sind.

Wie in Fig. 4 dargestellt ist, weist die erste Referenzzieleinheit 120 zwischen den Teilsektoren mit den Referenzzielen 122, 130 Aussparungen auf. Die Aussparungen sind dann vor den Sensoren 110, 140 angeordnet, wenn die Referenzzieleinheit 120 aus der in den Figuren 3 und 4 dargestellten Stellung 45° um die Drehachse 129 gedreht wird, so dass das Referenzziel 110 aus der Teststellung 127 in eine Ruhestellung 126 und gleichzeitig die weiteren Referenzziele 130 jeweils aus den weiteren Teststellungen 132 in weitere Ruhestellungen 133 bewegt werden. In den Ruhestellungen 126, 133 sind die Referenzziele 122, 130 dann außerhalb der Zwischenbereiche 108, 109 angeordnet.

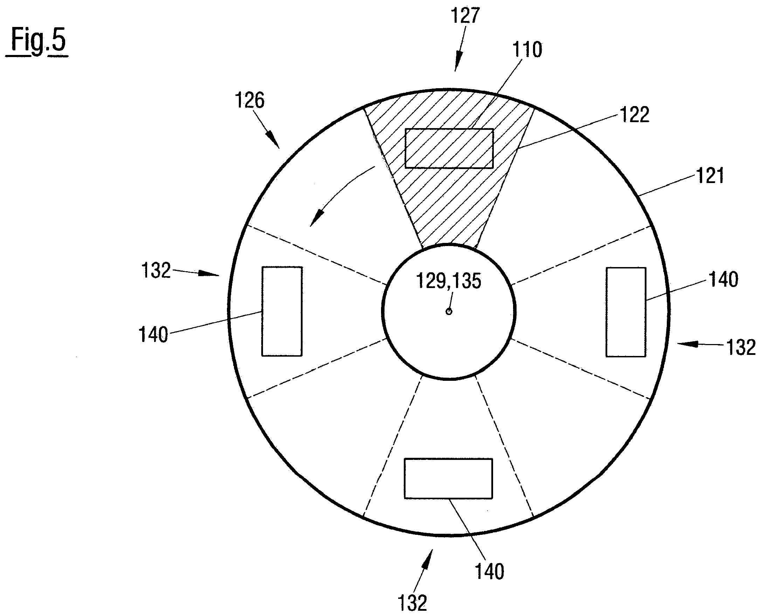

Fig. 5 zeigt eine Aufsicht von unten auf eine Referenzzieleinheit 121 einer zweiten Ausführungsform des Sensormoduls 100, sowie die über der Referenzzieleinheit 121 liegenden Sensoren 110, 140. Soweit im Folgenden keine Unterschiede beschrieben werden oder dargestellt sind, ist das Sensormodul 100 in der zweiten Ausführungsform ausgebildet, wie es für die erste Ausführungsform beschrieben wird.

Die Referenzzieleinheit 121 umfasst lediglich ein Referenzziel 122, nicht jedoch weitere Referenzziele 130. Die Referenzzieleinheit 121 weist in den nicht von dem Referenzziel 122 abgedeckten Bereichen eine Aussparung auf, durch die die Sensoren 110, 140 die Detektionsbereiche 106, 107 erfassen können. Bei der zweiten Ausführungsform des Sensormoduls 100 wird das Referenzziel 122 durch Drehung der Referenzzieleinheit 121 um die Drehachse 129 in weitere Teststellungen 132 vor den weiteren Sensoren 140 bewegt. In den weiteren Teststellungen 132 ist das Referenzziel 122 jeweils in den weiteren Zwischenbereichen 109 vor den weiteren Sensoren 140 angeordnet, um Referenzmessungen der weiteren Sensoren 140 auf das Referenzziel 122 zu ermöglichen. Mittels der in Fig. 5 dargestellten Referenzzieleinheit 121 können die Referenzmessung des Sensors 110 und die Referenzmessungen der weiteren Sensoren 140 jeweils nacheinander durchgeführt werden, indem das Referenzziel 122 zunächst in die Teststellung 127 und nach Abschluss der Referenzmessung des Sensors 110 nacheinander in die weiteren Teststellungen 132 bewegt wird.

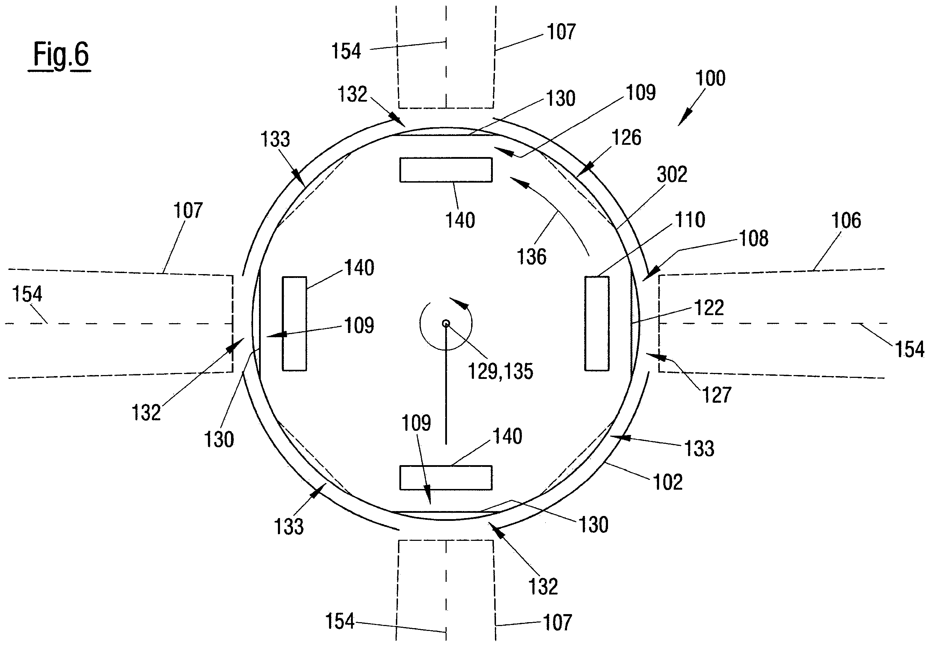

Fig. 6 zeigt eine Aufsicht auf eine dritte Ausführungsform des Sensormoduls 100. Soweit im Folgenden keine Unterschiede beschrieben werden oder dargestellt sind, ist das Sensormodul 100 in der dritten Ausführungsform ausgebildet, wie es für die erste Ausführungsform des Sensormoduls 100 beschrieben wird. In der dritten Ausführungsform umfasst das Sensormodul 100 ebenfalls einen Sensor 110, sowie drei weitere Sensoren 140, die allerdings derart entlang einer Umfangrichtung 136 um die Zentralachse 135 angeordnet sind, dass die Hauptmessrichtungen 154 ihrer Detektionsbereichen 106, 107 jeweils radial nach außen zeigen.

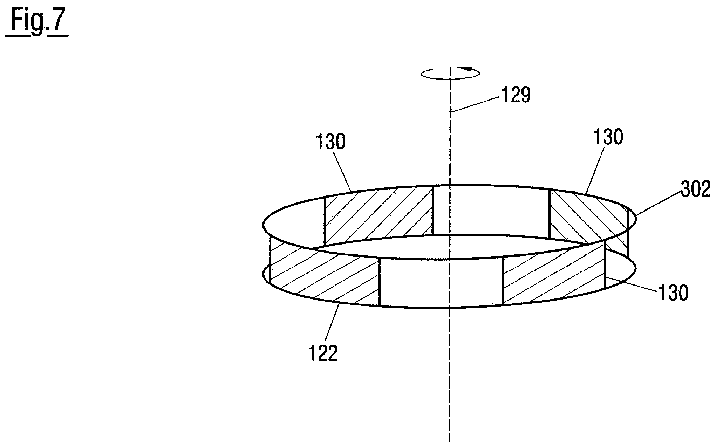

Das Sensormodul 100 umfasst in der dritten Ausführungsform eine Referenzzieleinheit 302, welche in Fig. 7 zusätzlich in einer schematischen perspektivischen Ansicht dargestellt ist. Soweit keine Unterschiede beschrieben werden oder dargestellt sind, ist die Referenzzieleinheit 302 der dritten Ausführungsform des Sensormoduls 100 ausgebildet, wie es für die Referenzzieleinheit 120 der ersten Ausführungsform des Sensormoduls 100 beschrieben wird. Insbesondere umfasst die Referenzzieleinheit 302 ein Referenzziel 122, sowie drei weitere Referenzziele 130. Die Referenzzieleinheit 302 ist bei der in Fig. 7 dargestellten Ausführungsform ringförmig und drehbar um eine Drehachse 129 ausgebildet und als ein die Sensoren 110, 140 in radialer Richtung umschließender Ring ausgebildet.

Die Referenzziele 122, 130 werden durch Drehung der Referenzzieleinheit 302 um die Drehachse 129 zwischen Teststellungen 122, 132 und Ruhestellungen 126, 133 bewegt. Die Referenzziele 122, 130 sind bei der Referenzzieleinheit 302 flächig und parallel zu der Drehachse 129 ausgebildet. Die Referenzziele 122, 130 sind an einer der Drehachse 129 zugewandten Innenseite der Referenzzieleinheit 302 angeordnet. Sie können als ebene Flächen oder als um die Drehachse 129 gekrümmte Flächen ausgebildet sein. Die Innenseite der Referenzzieleinheit 302 ist als Zylinderfläche ausgebildet, wobei die Referenzziele 122, 130 jeweils als in der Umfangrichtung 136 angeordnete Abschnitte der Zylinderfläche ausgebildet sein können. In der Umfangrichtung 136 zwischen den Referenzzielen 122, 130 weist die Referenzzieleinheit 302, wie auch die Referenzzieleinheiten 120, 121 der ersten und zweiten Ausführungsform des Sensormoduls 100, Aussparungen auf, durch die die Sensoren 110, 140 jeweils in den Detektionsbereichen 106, 107 vorhandene Detektionsobjekte 10, 12 erfassen können.

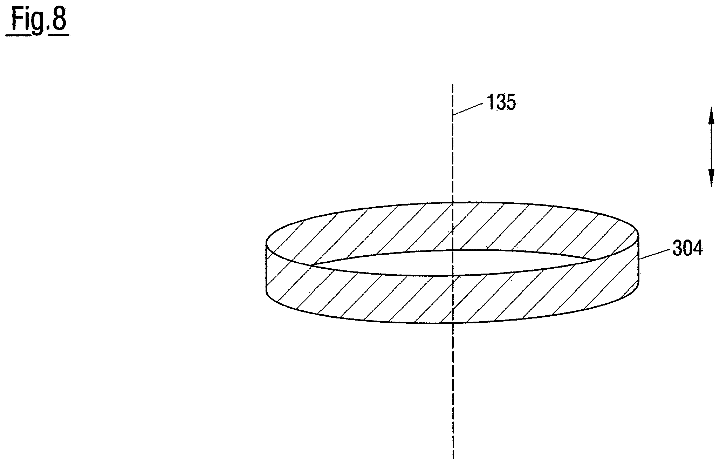

Fig. 8 zeigt eine Referenzzieleinheit 304 einer vierten Ausführungsform des Sensormoduls 100. Soweit keine Unterschiede beschrieben werden oder dargestellt sind, ist das Sensormodul 100 in der vierten Ausführungsform ausgebildet, wie es für das Sensormodul 100 in der dritten Ausführungsform beschrieben wird. Die in Fig. 8 dargestellte Referenzzieleinheit 304 weist allerdings keine Aussparungen auf, sondern umfasst an ihrer der Zentralachse 135 und den Sensoren 110, 140 zugewandten Seite eine ringförmige und geschlossene Innenseite.

Die in Fig. 8 dargestellte Referenzzieleinheit 304 ist nicht um die durch die Zentralachse 135 gebildete Drehachse 129 drehbar angeordnet, sondern entlang der Zentralachse 135 verschiebbar ausgebildet. Insbesondere ist die Referenzzieleinheit 304 zwischen einer Teststellung und einer Ruhestellung entlang der Zentralachse 135 verschiebbar, wobei die Innenseite der Referenzzieleinheit 304 in der Teststellung in den Zwischenbereichen 108, 109 vor den Sensoren 110, 140 der vierten Ausführungsform des Sensormoduls 100 angeordnet ist. In der Ruhestellung ist die Referenzzieleinheit 304 vollständig außerhalb der Zwischenbereiche 108, 109 angeordnet. Die Ruhestellung ist gegenüber der Teststellung in das Innere des Gehäuses 102 der vierten Ausführungsform des Sensormoduls 100 zurückversetzt.

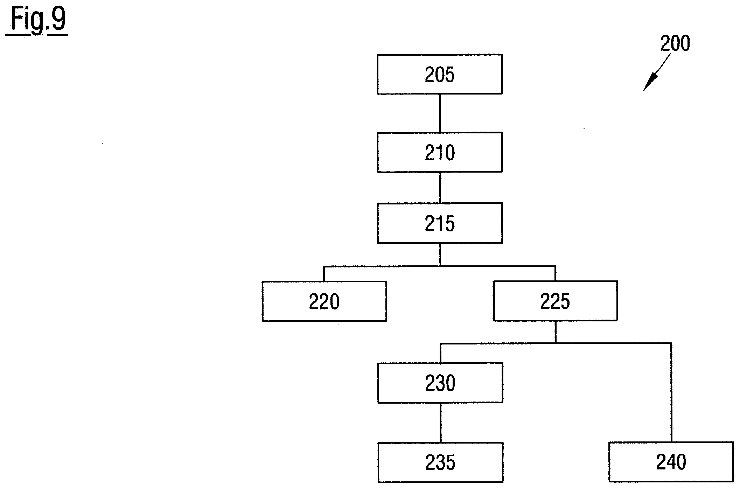

Fig. 9 zeigt ein Verfahren 200 zum Betreiben der Ausführungsformen des Sensormoduls 100. Das Verfahren umfasst das Anordnen 205 der Referenzziele 122, 130 in den Teststellungen 127, 132, 132 und das Ausführen 210 der Referenzmessungen mit den Sensoren 110, 140. Anschließend werden die bei den Referenzmessungen gewonnenen Referenzmesswerte mit hinterlegten Erwartungswerten verglichen (215). Wird eine sicherheitskritische Abweichung zwischen den Referenzmesswerten und den Erwartungswerten festgestellt, wird eine Sicherheitsreaktion 220 ausgeführt und ein Not-Halt des Roboters 1 ausgeführt, weil offensichtlich eine Fehlfunktion des Sensormoduls 100 vorliegt und keine sichere Messungen mehr garantiert sind. Wird keine sicherheitskritische Abweichung zwischen den Referenzmesswerten und den Erwartungswerten festgestellt, werden die Referenzziele 122, 130 in die Ruhestellungen 126, 133 bewegt (225).

Anschließend kann im Rahmen des Verfahrens 200 ein Freigeben 240 einer den Sicherheitsbereich 8 der Maschine 1 gefährdenden Funktion umfassen. Wird jedoch bei freigegebener gefährdender Funktion ein in den Detektionsbereichen 106, 107 vorhandenes Detektionsobjekt 10, 12 erfasst, wird eine weitere Sicherheitsreaktion 235 ausgeführt. Wie bei der Sicherheitsreaktion 220, die bei einer Fehlfunktion des Sensormoduls 100 ausgelöst wird, kann es sich bei der weiteren Sicherheitsreaktion 235 ebenfalls um einen Not-Halt des Roboters 1 handeln.

### Bezugszeichenliste

- 1: Roboter
- 5: Roboterarm
- 7: Werkzeugeinheit
- 8: Sicherheitsbereich
- 10: Detektionsobjekt
- 11: Abstand
- 12: weiteres Detektionsobjekt
- 20: sicherheitsgerichtetes Steuersystem
- 25: Sicherheitssteuereinheit
- 32: Antrieb
- 100: Sensormodul
- 102: Gehäuse
- 104: Gehäuseöffnung
- 106: Detektionsbereich
- 107: weiterer Detektionsbereich
- 108: Zwischenbereich
- 109: weiterer Zwischenbereich
- 110: Sensor
- 111: Erfassungsbereich
- 120, 121: Referenzzieleinheit
- 122: Referenzziel
- 124: Referenzabstand
- 126: Ruhestellung
- 127: Teststellung
- 129: Drehachse
- 130: weiteres Referenzziel
- 132: weitere Teststellung
- 133: weitere Ruhestellung
- 135: Zentralachse
- 136: Umfangrichtung
- 140: weiterer Sensor
- 154: Hauptmessrichtung
- 200: Verfahren
- 205: Anordnen in der Teststellung
- 210: Ausführen einer Referenzmessung
- 215: Vergleich mit Erwartungswerten
- 220: Ausführen einer Sicherheitsreaktion
- 225: Bewegen in die Ruhestellung
- 230: Erfassen eines Detektionsobjekts
- 235: Ausführen einer weiteren Sicherheitsreaktion
- 240: Freigeben einer gefährdenden Funktion
- 302, 304: Referenzzieleinheit

## Patentansprüche

1. Sensormodul (100) mit einem optoelektronischen Distanzsensor (110), wobei der Distanzsensor (110) dazu ausgebildet ist, ein in einem Detektionsbereich (106) des Sensormoduls (100) befindliches Detektionsobjekt (10) zu erfassen,
wobei das Sensormodul (100) ein Referenzziel (122) aufweist,
wobei das Referenzziel (122) relativ zu dem Distanzsensor (110) zwischen einer Teststellung (127) und einer Ruhestellung (126) bewegbar ist, wobei das Referenzziel (122) an dem Sensormodul (100) angeordnet ist und das Referenzziel (122) und der Distanzsensor (110) beweglich miteinander verbunden sind,
wobei das Referenzziel (122) in der Teststellung (127) zumindest teilweise in einem zwischen dem Distanzsensor (110) und dem Detektionsbereich (106) des Sensormoduls (100) angeordneten Zwischenbereich (108) des Sensormoduls (100) angeordnet ist, um eine Referenzmessung des Distanzsensors (110) auf das Referenzziel (122) zu ermöglichen,
wobei das Referenzziel (122) in der Ruhestellung (126) außerhalb des Zwischenbereichs (108) angeordnet ist, um ein Erfassen eines in dem Detektionsbereich (106) des Sensormoduls (100) befindlichen Detektionsobjekts (10) durch den Distanzsensor (110) zu ermöglichen,
wobei das Referenzziel (122) in der Teststellung in einem vordefinierten Referenzabstand (124) zu dem Distanzsensor (110) angeordnet ist, und
wobei der Distanzsensor (110) dazu ausgebildet ist, im Rahmen der Referenzmessung einen Referenzmesswert eines Referenzabstands (124) des Referenzziels (122) zu messen.

2. Sensormodul (100) nach Anspruch 1,
wobei der Distanzsensor (110) in einem Gehäuse (102) des Sensormoduls (100) angeordnet und starr mit dem Gehäuse (102) verbunden ist, wobei das Referenzziel (122) an dem Gehäuse (102), bevorzugt in dem Gehäuse (102), angeordnet und beweglich mit dem Gehäuse (102) verbunden ist.

3. Sensormodul (100) nach einem der vorhergehenden Ansprüche,
wobei das Referenzziel (122) um eine Drehachse (129) drehbar mit dem Distanzsensor (110) verbunden und dazu ausgebildet ist, zwischen der Teststellung (127) und der Ruhestellung (126) durch Drehung um die Drehachse (129) bewegt zu werden.

4. Sensormodul (100) nach Anspruch 3,
wobei das Referenzziel (122) um 360° drehbar um die Drehachse (129) angeordnet ist.

5. Sensormodul (100) nach einem der Ansprüche 3 und 4, wobei das Referenzziel (122) flächig ausgebildet und senkrecht zu der Drehachse (129) ausgerichtet ist.

6. Sensormodul (100) nach einem der Ansprüche 3 und 4, wobei das Referenzziel (122) flächig ausgebildet und parallel zu der Drehachse (129) ausgerichtet ist.

7. Sensormodul (100) nach einem der vorhergehenden Ansprüche, wobei das Sensormodul (100) einen weiteren Sensor (140) umfasst, wobei der weitere Sensor (140) dazu ausgebildet ist, ein in einem weiteren Detektionsbereich (107) des Sensormoduls (100) befindliches weiteres Detektionsobjekt (12) zu erfassen,
wobei das Sensormodul (100) einen zwischen dem weiteren Sensor (140) und dem weiteren Detektionsbereich (107) angeordneten weiteren Zwischenbereich (109) umfasst,
wobei das Referenzziel (122) dazu ausgebildet ist, in eine weitere Teststellung (132) bewegt zu werden,
wobei das Referenzziel (122) in der weiteren Teststellung (132) in dem weiteren Zwischenbereich (108) angeordnet ist, um eine Referenzmessung des weiteren Sensors (140) auf das Referenzziel (122) zu ermöglichen.

8. Sensormodul (100) nach einem der Ansprüche 1 bis 6,
wobei das Sensormodul (100) einen weiteren Sensor (140) umfasst, wobei der weitere Sensor (140) dazu ausgebildet ist, ein in einem weiteren Detektionsbereich (107) des Sensormoduls (100) befindliches weiteres Detektionsobjekt (12) zu erfassen,
wobei das Sensormodul (100) einen zwischen dem weiteren Sensor (140) und dem weiteren Detektionsbereich (107) angeordneten weiteren Zwischenbereich (109) umfasst,
wobei das Sensormodul (100) ein weiteres Referenzziel (130) umfasst, wobei das weitere Referenzziel (130) dazu ausgebildet ist, zwischen einer weiteren Teststellung (132) und einer weiteren Ruhestellung (133) bewegt zu werden,
wobei das weitere Referenzziel (130) in der weiteren Teststellung (132) in dem weiteren Zwischenbereich (108) angeordnet ist, um eine Referenzmessung des weiteren Sensors (140) auf das weitere Referenzziel (130) zu ermöglichen.

9. Sensormodul (100) nach Anspruch 8,
wobei das weitere Referenzziel (130) mit dem Referenzziel (122) starr verbunden und dazu ausgebildet ist, synchron mit dem Referenzziel (122) zwischen der weiteren Teststellung (132) und der weiteren Ruhestellung (133) bewegt zu werden.

10. Sensormodul (100) nach einem der Ansprüche 8 bis 9,
wobei das weitere Referenzziel (130) dazu ausgebildet ist, in die weitere Teststellung (132) bewegt zu werden, während zugleich das Referenzziel (122) in die Teststellung (127) bewegt wird.

11. Sensormodul (100) nach einem der Ansprüche 7 bis 10,
wobei der Distanzsensor (110) und der weitere Sensor (140) entlang einer um eine Zentralachse (135) verlaufenden Umfangrichtung (136) angeordnet sind,
wobei das Referenzziel (122) entlang der Zentralachse (135) verschiebbar ausgebildet ist.

12. Maschine (1) mit einem beweglichen Maschinenteil (5) und einem Sensormodul (100) nach einem der vorhergehenden Ansprüche,
wobei das Sensormodul (100) starr an dem beweglichen Maschinenteil (5) angeordnet ist.

13. Maschine (1) nach Anspruch 12,
wobei das bewegliche Maschinenteil (5) als ein Roboterarm ausgebildet ist, wobei das Sensormodul (100) derart an einem vorderen Ende des Roboterarms angeordnet ist,
dass sich der Detektionsbereich (106) des Distanzsensors (110) mit dem Roboterarm mitbewegt, um eine Annäherung des Roboterarms, vorzugsweise eine Annäherung einer starr mit dem vorderen Ende des Roboterarms verbundenen Werkzeugeinheit (7), an ein Detektionsobjekts (10) zu erfassen.

14. Verfahren (200) zum Betreiben eines Sensormoduls (100) mit einem optoelektronischen Distanzsensor (110) und einem mit dem Distanzsensor (110) beweglich verbundenen Referenzziel (122),
wobei das Verfahren (200) die folgenden Schritte umfasst:
- Anordnen (205) des Referenzziels (122) in einer Teststellung (127), wobei das Referenzziel (122) in der Teststellung (127) zumindest teilweise in einem zwischen dem Distanzsensor (110) und einem Detektionsbereich (106) des Sensormoduls (100) angeordneten Zwischenbereich (108) angeordnet wird,
wobei das Referenzziel (122) in der Teststellung in einem vordefinierten Referenzabstand (124) zu dem Distanzsensor (110) angeordnet wird,
- Ausführen (210) einer Referenzmessung des Distanzsensors (110) auf das Referenzziel (122),
wobei der Distanzsensor (110) im Rahmen der Referenzmessung einen Referenzmesswert eines Referenzabstands (124) des Referenzziels (122) misst,
- Bewegen (225) des Referenzziels (122) von der Teststellung (127) in eine Ruhestellung (126), wobei das Referenzziel (122) in der Ruhestellung (126) außerhalb des Zwischenbereichs (108) angeordnet ist,
- Erfassen (230) eines in dem Detektionsbereich (106) befindlichen Detektionsobjekts (10) mittels des Distanzsensors (110).

15. Verfahren (200) nach Anspruch 14,
wobei das Anordnen (205) des Referenzziels (122) in der Teststellung (127) zum Ausführen der Referenzmessung periodisch wiederholt wird, vorzugsweise durch Drehung des Referenzziels (122) um eine Drehachse (129).

## Claims

1. A sensor module (100) comprising an optoelectronic distance sensor (110), wherein the distance sensor (110) is configured to detect a detection object (10) located in a detection zone (106) of the sensor module (100), wherein the sensor module (100) has a reference target (122),
wherein the reference target (122) is movable relative to the distance sensor (110) between a test position (127) and a position of rest (126), wherein the reference target (122) is arranged at the sensor module (100) and the reference target (122) and the distance sensor (110) are movably connected to one another,
wherein, in the test position (127), the reference target (122) is at least partly arranged in an intermediate zone (108) of the sensor module (100), which is arranged between the distance sensor (110) and the detection zone (106) of the sensor module (100), to enable a reference measurement of the distance sensor (110) with respect to the reference target (122), wherein, in the position of rest (126), the reference target (122) is arranged outside the intermediate zone (108) to enable a detection of a detection object (10) located in the detection zone (106) of the sensor module (100) by the distance sensor (110),
wherein, in the test position, the reference target (122) is arranged at a predefined reference distance (124) from the distance sensor (110), and wherein the distance sensor (110) is configured to measure a reference measurement value of a reference distance (124) of the reference target (122) as part of the reference measurement.

2. A sensor module (100) in accordance with claim 1,
wherein the distance sensor (110) is arranged in a housing (102) of the sensor module (100) and is rigidly connected to the housing (102), and wherein the reference target (122) is arranged at the housing (102), preferably in the housing (102), and is movably connected to the housing (102).

3. A sensor module (100) in accordance with one of the preceding claims,
wherein the reference target (122) is rotatably connected to the distance sensor (110) about an axis of rotation (129) and is configured to be moved between the test position (127) and the position of rest (126) by a rotation about the axis of rotation (129).

4. A sensor module (100) in accordance with claim 3,
wherein the reference target (122) is rotatable by 360° about the axis of rotation (129).

5. A sensor module (100) in accordance with one of the claims 3 and 4,
wherein the reference target (122) is areal and is aligned perpendicular to the axis of rotation (129).

6. A sensor module (100) in accordance with one of the claims 3 and 4,
wherein the reference target (122) is areal and is aligned in parallel with the axis of rotation (129).

7. A sensor module (100) in accordance with any one of the preceding claims, wherein the sensor module (100) comprises a further sensor (140), wherein the further sensor (140) is configured to detect a further detection object (12) located in a further detection zone (107) of the sensor module (100),
wherein the sensor module (100) comprises a further intermediate zone (109) arranged between the further sensor (140) and the further detection zone (107),
wherein the reference target (122) is configured to be moved into a further test position (132), and
wherein, in the further test position (132), the reference target (122) is arranged in the further intermediate zone (108) to enable a reference measurement of the further sensor (140) with respect to the reference target (122).

8. A sensor module (100) in accordance with any one of the claims 1 to 6, wherein the sensor module (100) comprises a further sensor (140), wherein the further sensor (140) is configured to detect a further detection object (12) located in a further detection zone (107) of the sensor module (100),
wherein the sensor module (100) comprises a further intermediate zone (109) arranged between the further sensor (140) and the further detection zone (107),
wherein the sensor module (100) comprises a further reference target (130),
wherein the further reference target (130) is configured to be moved between a further test position (132) and a further position of rest (133), and wherein, in the further test position (132), the further reference target (130) is arranged in the further intermediate zone (108) to enable a reference measurement of the further sensor (140) with respect to the further reference target (130).

9. A sensor module (100) in accordance with claim 8,
wherein the further reference target (130) is rigidly connected to the reference target (122) and is configured to be moved synchronously with the reference target (122) between the further test position (132) and the further position of rest (133).

10. A sensor module (100) in accordance with one of the claims 8 to 9,
wherein the further reference target (130) is configured to be moved into the further test position (132) while the reference target (122) is simultaneously moved into the test position (127).

11. A sensor module (100) in accordance with any one of the claims 7 to 10,
wherein the distance sensor (110) and the further sensor (140) are arranged along a peripheral direction (136) running around a central axis (135), and
wherein the reference target (122) is displaceable along the central axis (135).

12. A machine (1) comprising a movable machine part (5) and a sensor module (100) in accordance with any one of the preceding claims,
wherein the sensor module (100) is rigidly arranged at the movable machine part (5).

13. A machine in accordance with claim 12,
wherein the movable machine part (5) is configured as a robot arm, wherein the sensor module (100) is arranged at a front end of the robot arm such
that the detection zone (106) of the distance sensor (110) moves along with the robot arm to detect an approach of the robot arm, preferably an approach of a tool unit (7) rigidly connected to the front end of the robot arm, to a detection object (10).

14. A method (200) of operating a sensor module (100) comprising an optoelectronic distance sensor (110) and a reference target (122) movably connected to the distance sensor (110),
wherein the method (200) comprises the following steps:
- arranging (205) the reference target (122) in a test position (127), wherein, in the test position (127), the reference target (122) is at least partly arranged in an intermediate zone (108) arranged between the distance sensor (110) and a detection zone (106) of the sensor module (100),
wherein, in the test position, the reference target (122) is arranged at a predefined reference distance (124) from the distance sensor (110);
- performing (210) a reference measurement of the distance sensor (110) with respect to the reference target (122),
wherein the distance sensor (110) measures a reference measurement value of a reference distance (124) of the reference target (122) as part of the reference measurement;
- moving (225) the reference target (122) from the test position (127) into a position of rest (126), wherein, in the position of rest (126), the reference target (122) is arranged outside the intermediate zone (108); and
- detecting (230) a detection object (10) located in the detection zone (106) by means of the distance sensor (110).

15. A method (200) in accordance with claim 14,
wherein the arrangement (205) of the reference target (122) in the test position (127) is periodically repeated for performing the reference measurement, preferably by rotating the reference target (122) about an axis of rotation (129).

## Revendications

1. Module de capteur (100) comportant un capteur de distance optoélectronique (110), le capteur de distance (110) étant réalisé pour détecter un objet de détection (10) se trouvant dans une zone de détection (106) du module de capteur (100),
dans lequel
le module de capteur (100) présente une cible de référence (122),
la cible de référence (122) est mobile par rapport au capteur de distance (110) entre une position de test (127) et une position de repos (126),
la cible de référence (122) est agencée sur le module de capteur (100), et la cible de référence (122) et le capteur de distance (110) sont reliés de façon mobile l'un à l'autre,
en position de test (127), la cible de référence (122) est agencée au moins partiellement dans une zone intermédiaire (108) du module de capteur (100) disposée entre le capteur de distance (110) et la zone de détection (106) du module de capteur (100), afin de permettre une mesure de référence du capteur de distance (110) par rapport à la cible de référence (122),
en position de repos (126), la cible de référence (122) est agencée en dehors de la zone intermédiaire (108), afin de permettre au capteur de distance (110) de détecter un objet de détection (10) se trouvant dans la zone de détection (106) du module de capteur (100),
en position de test, la cible de référence (122) est agencée à une distance de référence (124) prédéfinie par rapport au capteur de distance (110), et le capteur de distance (110) est réalisé pour mesurer, dans le cadre de la mesure de référence, une valeur de mesure de référence d'une distance de référence (124) de la cible de référence (122).

2. Module de capteur (100) selon la revendication 1,
dans lequel
le capteur de distance (110) est agencé dans un boîtier (102) du module de capteur (100) et est relié de manière rigide au boîtier (102), et
la cible de référence (122) est agencée sur le boîtier (102), de préférence dans le boîtier (102), et est reliée de manière mobile au boîtier (102).

3. Module de capteur (100) selon l'une des revendications précédentes, dans lequel
la cible de référence (122) est reliée au capteur de distance (110) de manière à pouvoir tourner autour d'un axe de rotation (129) et est réalisée pour être déplacée entre la position de test (127) et la position de repos (126) par rotation autour de l'axe de rotation (129).

4. Module de capteur (100) selon la revendication 3,
dans lequel
ladite cible de référence (122) est agencée de manière à pouvoir tourner de 360° autour dudit axe de rotation (129).

5. Module de capteur (100) selon l'une des revendications 3 et 4,
dans lequel
la cible de référence (122) est plane et orientée perpendiculairement à l'axe de rotation (129).

6. Module de capteur (100) selon l'une des revendications 3 et 4,
dans lequel
la cible de référence (122) est plane et orientée parallèlement à l'axe de rotation (129).

7. Module de capteur (100) selon l'une des revendications précédentes, dans lequel
le module de capteur (100) comprend un autre capteur (140),
l'autre capteur (140) est réalisé pour détecter un autre objet de détection (12) se trouvant dans une autre zone de détection (107) du module de capteur (100),
le module de capteur (100) comprend une autre zone intermédiaire (109) disposée entre l'autre capteur (140) et l'autre zone de détection (107), la cible de référence (122) est réalisée pour être déplacée jusque dans une autre position de test (132),
dans l'autre position de test (132), la cible de référence (122) est agencée dans l'autre zone intermédiaire (108), afin de permettre une mesure de référence de l'autre capteur (140) par rapport à la cible de référence (122).

8. Module de capteur (100) selon l'une des revendications 1 à 6,
dans lequel
le module de capteur (100) comprend un autre capteur (140),
l'autre capteur (140) est réalisé pour détecter un autre objet de détection (12) se trouvant dans une autre zone de détection (107) du module de capteur (100),
le module de capteur (100) comprend une autre zone intermédiaire (109) disposée entre l'autre capteur (140) et l'autre zone de détection (107), le module de capteur (100) comprend une autre cible de référence (130), l'autre cible de référence (130) est réalisée pour être déplacée entre une autre position de test (132) et une autre position de repos (133), dans l'autre position de test (132), l'autre cible de référence (130) est agencée dans l'autre zone intermédiaire (108), afin de permettre une mesure de référence de l'autre capteur (140) par rapport à l'autre cible de référence (130).

9. Module de capteur (100) selon la revendication 8,
dans lequel
l'autre cible de référence (130) est reliée de manière rigide à ladite cible de référence (122) et est réalisée pour être déplacée de manière synchrone avec ladite cible de référence (122) entre l'autre position de test (132) et l'autre position de repos (133).

10. Module de capteur (100) selon l'une des revendications 8 à 9,
dans lequel
l'autre cible de référence (130) est réalisée pour être déplacée jusque dans l'autre position de test (132) alors que la cible de référence (122) est déplacée simultanément jusque dans la position de test (127).

11. Module de capteur (100) selon l'une des revendications 7 à 10,
dans lequel
le capteur de distance (110) et l'autre capteur (140) sont agencés le long d'une direction circonférentielle (136) s'étendant autour d'un axe central (135), et
la cible de référence (122) est réalisée pour pouvoir être déplacée en translation le long de l'axe central (135).

12. Machine (1) comprenant une partie de machine mobile (5) et un module de capteur (100) selon l'une des revendications précédentes,
dans laquelle
le module de capteur (100) est agencé de manière rigide sur la partie de machine mobile (5).

13. Machine (1) selon la revendication 12,
dans laquelle
la partie de machine mobile (5) est réalisée sous forme de bras de robot,
le module de capteur (100) est agencé à une extrémité avant du bras de robot de telle sorte que la zone de détection (106) du capteur de distance (110) se déplace avec le bras de robot pour détecter une approche du bras de robot, de préférence une approche d'une unité d'outil (7) reliée de manière rigide à l'extrémité avant du bras de robot, vers un objet de détection (10).

14. Procédé (200) pour faire fonctionner un module de capteur (100) comportant un capteur de distance optoélectronique (110) et une cible de référence (122) reliée de manière mobile au capteur de distance (110),
le procédé (200) comprenant les étapes suivantes consistant à :
- agencer (205) la cible de référence (122) dans une position de test (127), la cible de référence (122), en position de test (127), étant agencée au moins partiellement dans une zone intermédiaire (108) disposée entre le capteur de distance (110) et une zone de détection (106) du module de capteur (100),
la cible de référence (122), en position de test, étant agencée à une distance de référence (124) prédéfinie par rapport au capteur de distance (110),
- effectuer (210) une mesure de référence du capteur de distance (110) par rapport à la cible de référence (122),
le capteur de distance (110) mesurant, dans le cadre de la mesure de référence, une valeur de mesure de référence d'une distance de référence (124) de la cible de référence (122),
- déplacer (225) la cible de référence (122) de la position de test (127) à une position de repos (126), la cible de référence (122) étant disposée en dehors de la zone intermédiaire (108) en position de repos (126),
- détecter (230) un objet de détection (10) se trouvant dans la zone de détection (106) au moyen du capteur de distance (110).

15. Procédé (200) selon la revendication 14,
dans lequel
l'agencement (205) de la cible de référence (122) dans la position de test (127) pour effectuer la mesure de référence est répété périodiquement, de préférence en faisant tourner la cible de référence (122) autour d'un axe de rotation (129).
